# EUROPEAN PATENT APPLICATION

(11) **EP 3 747 260 A1**
(43) Date of publication of application: **09.12.2020**
(21) Application number: 20178530.0
(22) Date of filing: 05.06.2020
(51) Int. Cl.: A01G 9/22, A01G 9/24

(54) **GREENHOUSE PROVIDED WITH VENTILATION SYSTEM**

(30) Priority: 07.06.2019 NL 2023273
(71) Applicant: Van der Ende Pompen B.V., 2676 LE Maasdijk (NL)
(72) Inventor: Van der Ende, Ferry, 2676 LE Maasdijk (NL); Van der Ende, Lex, 2676 LE Maasdijk (NL)
(74) Representative: Arnold & Siedsma

(57) **Abstract**

Agricultural and/or horticultural greenhouse (100) for cultivating crops therein, wherein at least a part of the greenhouse (100) is provided close to the upper side with horizontally suspended fabric screen (2a,2b), which define in that part a cultivation space for cultivating crops therein under the fabric screens (2a,2b) and a ridge space (104) separated from the cultivation space, wherein the greenhouse (100) further comprises an elongate connecting profile (3), wherein two fabric screens (2a,2b) extend on either side of the connecting profile (3) and wherein the connecting profile (3) comprises over a part of the length an opening (4) for creating a passage between the cultivation and ridge space.

## Description

The invention relates to an agricultural and/or horticultural greenhouse for cultivating crops therein, wherein at least a part of the greenhouse is provided close to the upper side with at least one horizontally suspended fabric screen which defines in that part a cultivation space for cultivating crops therein under the fabric screen and a ridge space separated from the cultivation space, wherein the fabric screen comprises at least one passage between the ridge space and the cultivation space.

Particularly in the case of modern, high greenhouses it is a problem that the heat supplied to the greenhouse for the purpose of creating good conditions for the growth of the crops accumulates in the upper part, i.e. close to the ridge, of the greenhouse while the lower part, i.e. where the crop is growing, must be additionally heated in order to maintain an optimum temperature. The invention further relates to a method for arranging a ventilation system in a greenhouse.

In order to prevent this loss of heat from the lower part to the upper part of the greenhouse it is known to suspend fabric screens above the crops. These fabric screens generally embodied in textile are suspended horizontally and define a ridge space on the upper side and a cultivation space, where the crops can be cultivated, below this fabric screen. The fabric screens generally extend over the whole area of the greenhouse, so providing for an efficient separation of these two spaces. The fabric screens are generally arranged on tensioning wires or other profiles, wherein the fabric screens can slide in the manner of a curtain over the tensioning wires in order to close and open the fabric screens.

Although such a system provides an improved heat insulation, there is the problem that, due to the separating action of the fabric screen, the moisture is also isolated in the cultivation space so that the air humidity and/or temperature rises in the cultivation space. In order to reduce this air humidity and/or temperature it is known to arrange ventilation passages in the fabric screen in order to supply relatively dry air from the ridge space to the cultivation space.

Such ventilation passages are generally arranged manually. Such passages, for instance when they are cut out of the fabric screen, are susceptible to wear, for instance due to fraying.

It is therefore an object, among others, of the present invention to provide an efficient agricultural and/or horticultural greenhouse in which the climate can be controlled in simple and/or efficient manner and wherein the above stated problems are at least partially solved.

This and other objects are achieved with an agricultural and/or horticultural greenhouse according to claim 1. This and other objects are more specifically achieved with an agricultural and/or horticultural greenhouse for cultivating crops therein, wherein at least a part of the greenhouse is provided close to the upper side with horizontally suspended fabric screen which defines in that part a cultivation space for cultivating crops therein under the fabric screen and a ridge space separated from the cultivation space, wherein the greenhouse further comprises an elongate connecting profile, wherein two fabric screens extend on either side of the connecting profile and wherein the connecting profile comprises an opening, particularly for the purpose of creating a passage between the cultivation space and the ridge space. Instead of passages in the fabric screen, a passage is created between the cultivation and ridge space by a passage in the connecting profile. The labour-intensive step of arranging holes in the fabric screen, with all the adverse effects of wear and fraying, is then no longer necessary. Climate control in the greenhouse is thus achieved in efficient manner.

The connecting profile and the fabric screens fit closely together here, so that the fabric screens and the connecting profile define the cultivation space and the ridge space separated from the cultivation space. The connecting profile as it were connects the two fabric screens, particularly close to the side edges. For the purpose of separation, the connecting profile is therefore preferably provided with a substantially closed upper surface which fits closely to the surface of the fabric screens. The opening is preferably situated only over a part of the length of the connecting profile and preferably extends between and upper and lower surface of the connecting profile.

The connecting profile is preferably arranged on the structure of the greenhouse and more preferably extends between two framework structures placed at a mutual distance in the greenhouse. The coupling systems for the fabric screen are preferably also arranged on this structure. The connecting profile can for instance be arranged between two lattice trusses.

The connecting profile preferably comprises at least one at least substantially tubular profile for the purpose of reinforcing the connecting profile. The profile is then sufficiently rigid to bridge the distance between two structures in the greenhouse. The opening can then be arranged in or through the profile for the purpose of forming the passage.

It is however preferred for the connecting profile to comprise two tubular profiles extending parallel to each other and a connecting plate extending between the tubular profiles. The tubular profiles provide sufficient strength here, wherein the connecting plate between the tubular profiles can be used to form the opening. It is for instance possible for several connecting plates, placed at a mutual distance, to be arranged between the tubular profiles, wherein the space between two connecting plates forms the opening. It is also possible for an opening to be made in the connecting plate. The opening is in both cases situated in the connecting plate.

The connecting plate is preferably formed from plate material, for instance steel or aluminium, and more preferably takes a form sloping downward toward the side edges. This improves the discharge of condensed water. The plate can for instance be curved or bent.

At least one of the tubular profiles, preferably both tubular profiles, preferably comprises a groove or a U-shaped receiving space for receiving a side edge of the connecting plate therein. An efficient connection between tubular profile and connecting plate is thus achieved.

In order to connect the fabric screens the connecting profile is preferably provided with two coupling systems for coupling a fabric screen on either side. The coupling systems are preferably situated on either side of the connecting profile. Such a coupling system preferably comprises a coupling wire or coupling profile extending parallel to the connecting profile for the purpose of coupling a fabric screen thereto. The fabric screen can for instance be provided on or close to the side edges with eyes or rings in which the wire can be received. The fabric screen can then slide over the wire.

The connecting profile preferably comprises two end plates between which the connecting profile extends. The end plates can be provided with connecting means, for instance holes, for the purpose of mounting the profile on the structure of the greenhouse. A simple installation of the system, wherein a good connection of the fabric screens to the connecting profile can be ensured, is possible when the coupling systems, particularly coupling wires, for the fabric screens also extend between the end plates.

In order to improve the separating action of the fabric screens it is known to arrange two or even more layers of fabric screen close to the upper part of the greenhouse. The two layers then extend substantially parallel to each other. It is for instance possible for the layers of fabric screen, and the coupling means intended therefor, to be arranged on the upper and underside of a lattice truss or another structure in the greenhouse.

In order to arrange passages efficiently the greenhouse then preferably comprises a plurality of connecting profiles, preferably extending one above the other. Each layer then comprises at least one connecting profile, wherein two fabric screens extend in each layer, on either side of the connecting profile. The connecting profiles with the respective fabric screens then define an intermediate space therebetween. Passages are then provided by an opening in at least one of the connecting profiles. The two connecting profiles are more preferably provided with an opening, wherein the two openings are more preferably substantially vertically aligned. The openings here extend one above the other, so that an efficient exchange of air is achieved between ridge and cultivation space via the intermediate space.

An even more efficient exchange takes place if an air duct extends between the openings of the connecting profiles. Air is then efficiently guided between the two openings, i.e. between the ridge space and the cultivation space.

According to a preferred embodiment, the greenhouse further comprises a ventilation system with air displacing means for displacing air in the cultivation space of the greenhouse. Known from EP 2 941 952 and NL 2 014 649, the content of which should be deemed as repeated and included herein, is a system wherein a fan or other air displacing means is situated close to the passage in the fabric screen and is configured to draw in and subsequently displace air from both the ridge space and the cultivation space.

It is then advantageous in use of the connecting profile for at least one of the air displacing means to be situated close to the opening, i.e. the passage, in the connecting profile. The air displacing means, for instance in the form of a fan, are then preferably configured to draw in and then displace air between the ridge space and the cultivation space, preferably from the ridge space to the cultivation space. The air displacing means are more preferably configured to draw in and then displace air from both the ridge space and the cultivation space. The air displacing means are preferably situated in the cultivation space.

The air displacing means have a divided function of drawing in air from the ridge space (ventilation) as well as drawing in air from the cultivation space (circulation) and subsequently distributing this air in the cultivation space, this resulting in a compact and efficient assembly. The air displacing means preferably embodied as fan are for this purpose placed and configured to draw in air, for instance through the venturi effect, through the passage out of the ridge space and to draw in air out of the cultivation space and subsequently circulate this air in the cultivation space.

Although it is possible for the air displacing means to be located upstream of the passage as seen in the direction of air displacement of the air displacing means, wherein the airflow emitted by the air displacing means along the passage has a suctioning action in the ridge space, an efficient suctioning takes place when the passage is situated in the suctioning area/range of the air displacing means. The air displacing means are preferably configured to displace air substantially horizontally in the cultivation space.

According to a further preferred embodiment, the air displacing means are coupled to the connecting profile. This enables a solid attachment, while the location of the air displacing means can also be chosen freely along the length of the connecting profile. This in contrast to the known systems, wherein the air displacing means were coupled to structural elements, such as lattice trusses, in a greenhouse. The climate can thus be controlled more precisely by accurate placing of the air displacing means.

The connecting profile is preferably provided with connecting means for coupling air displacing means thereto. The profile can be provided with holes for suspending air displacing means such as a fan therefrom.

When use is made of a connecting profile with at least one tubular profile as discussed above, the air displacing means are preferably coupled to the tubular profile for the purpose of a firm connection. The air displacing means are more preferably coupled to the two tubular profiles of the connecting profile.

According to a further preferred embodiment, the air displacing means comprise a housing, wherein the opening in the connecting profile debouches in a first inlet of the housing and wherein the housing also comprises a second inlet which is in contact with the cultivation space and wherein the air displacing means are configured to discharge the air out of the housing through an outlet. The housing enables an efficient control of the airflows. The housing is preferably coupled to the connecting profile so that an efficient suspension of the system is provided.

When a plurality of layers of fabric screens are situated in the greenhouse as discussed above, the air displacing means are preferably situated close to the opening of the lower connecting profile. The air displacing means are preferably situated in the cultivation space.

For the purpose of efficient guiding of air from the ridge space to the cultivation space an air duct, which can be situated between the openings of the connecting profiles, is coupled to the housing, wherein the air duct debouches in the housing, preferably in the first inlet thereof. The air duct and the housing can take an integral form.

For the purpose of a more efficient adjustment of the mixing ratio between air from the ridge space and the cultivation space it is advantageous for the ventilation system to comprise a flap for controlling the airflows from the cultivation and ridge space. According to a preferred embodiment, the housing comprises for this purpose at least one flap for controlling the airflow from the two inlets to the outlet. The flap can be provided between the two inlets and can be movable between a first position, in which the first inlet is reduced or closed, and a second position in which the second inlet is reduced or closed. The two inlets can also be provided with their own flap, while the outlet can also be provided with a separate flap.

The invention further relates to a connecting profile for use in an agricultural and/or horticultural greenhouse as described above.

The invention further relates to a method for arranging a ventilation system in an agricultural and/or horticultural greenhouse, particularly for obtaining a greenhouse as described above, comprising the steps of:
- mounting a connecting profile in the greenhouse, wherein the connecting profile comprises an opening over a part of the length;
- arranging fabric screens on either side of the connecting profile.

A passage through the fabric screens, i.e. through the connecting profile which as it were connects the fabric screens, is thus created in efficient manner. As discussed above, a particularly efficient ventilation system is obtained if the method further comprises the step of attaching air displacing means to the connecting profile, wherein the air displacing means extend close to the opening in the connecting profile.

The present invention is further illustrated with reference to the following figures which show preferred embodiments of the agricultural and/or horticultural greenhouse but which are not intended to limit the scope of the invention in any way, wherein:
- figure 1 shows schematically a greenhouse with partially removed roof;
- figure 2 shows a detail of the connecting profile with ventilation system;
- figure 3 shows a detail of figure 2 wherein the interior of the ventilation system is visible;
- figures 4 and 5 show cross-sections of connecting profiles with fabric screens.

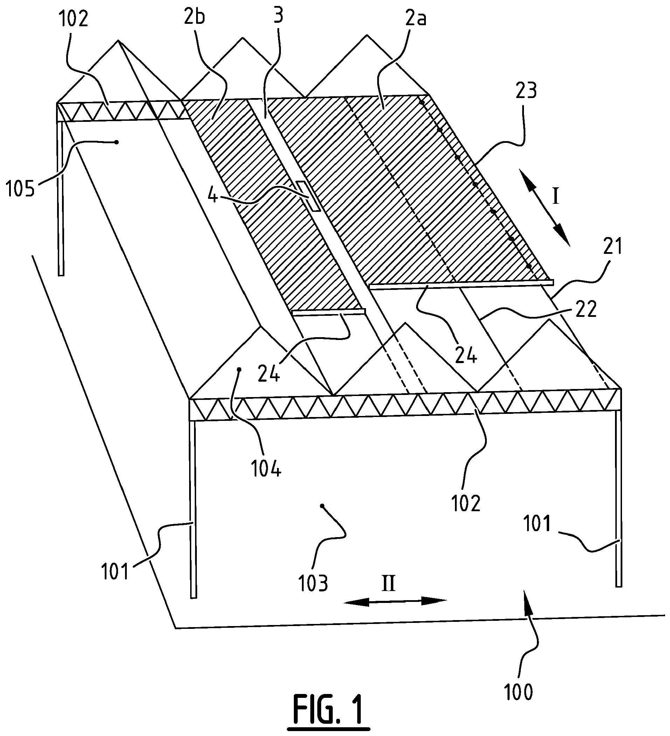

Figure 1 shows a greenhouse 100, the roof 105 of which is partially not shown. Greenhouse 100 comprises a structure framework in the form of uprights 101 between which transverse profiles 102 or lattice trusses 102 are arranged. Tensioned between lattice trusses 102 are fabric screen wires 21 and 22, to which fabric screens 2a and 2b are coupled. Arranged for this purpose on a side edge 23 of fabric screen 2a are eyes or rings, through which wire 21 is placed. Screen 2a is here as it were threaded onto wire 21. The wire 22 located more toward the centre is situated under the fabric screen 2a as soon as the screen 2a rests thereon. Screens 2a and 2b are provided at the outer ends with profiles 24, and the profiles 24 with fabric screen 2a, 2b are movable in a direction indicated with I. Fabric screens 2a, 2b can hereby be opened and closed. This is shown schematically in figure 1 by the screens 2a, 2b in different positions.

A connecting profile 3 is also arranged between the lattice trusses 102. The fabric screens 2a, 2b fit closely to the connecting profile 3 in the width direction II. Fabric screens 2a, 2b can move along the profile 3 for the purpose of opening and closing of fabric screens 2a, 2b. In the closed positions of fabric screens 2a, 2b the screens 2a, 2b and the profile 3 define a ridge space 104 separated from a cultivation space 103. An opening 4 is however arranged in connecting profile 3 in order to enable ventilation between the ridge space 104 and the cultivation space 103. Opening 4 forms a passage or connection between ridge space 104 and cultivation space 103.

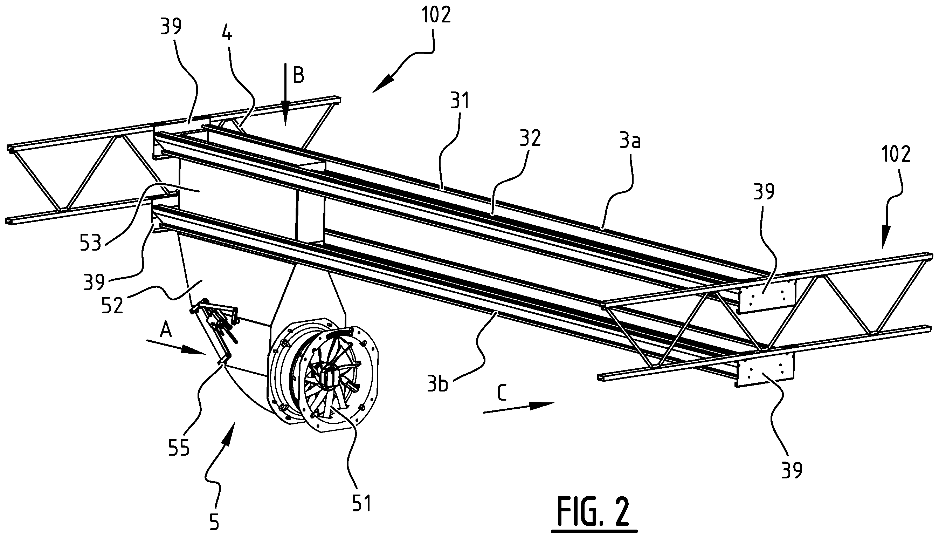

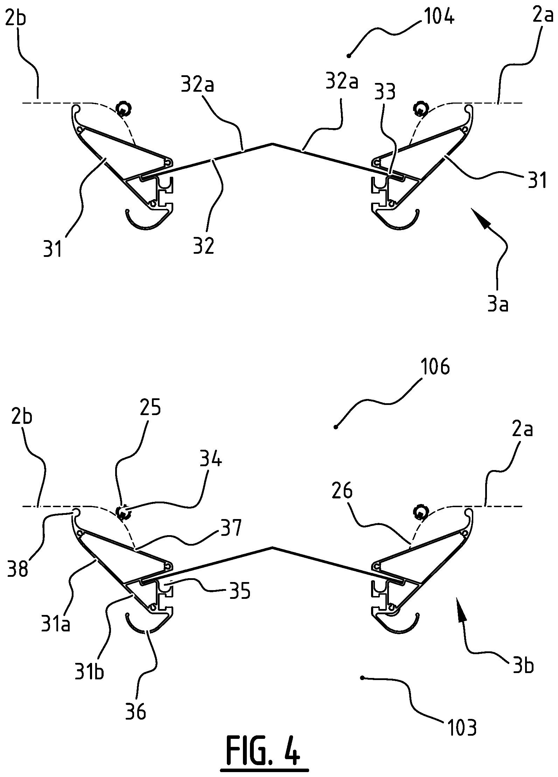

Figures 2-4 show a greenhouse in detail, wherein two layers of fabric screens 2a and 2b are provided. This can be seen clearly in the cross-section of figure 4, wherein two screens 2a on the right and two screens 2b on the left are visible one above the other. Connecting profile 3a is arranged between the upper two screens 2a, 2b, while a connecting profile 3b is arranged between the lower screens 2a, 2b. Visible in figure 4 are profiles 34, which are suspended between two end plates 39 of connecting profiles 3a, 3b (see particularly figure 2, where both end plates 39 are visible). Connecting profiles 3a, 2b are coupled to lattice trusses 102, in this example with connecting means 39a in the form of protrusions provided with holes, lying on lattice trusses 102.

Profiles 34, which can also be embodied as wires, are placed through eyes 25 on the edge of fabric screens 2a, 2b. Screens 2a, 2b are here still movable in the longitudinal direction of profiles 3a, 3b. A side edge 26 of screens 2a, 2b can sag here, and in this embodiment lies on a downward sloping upper wall 37 of profiles 3a, 3b. This improves the separation between the upper side and underside of fabric screen 2a, 2b. Provided in the embodiment of figure 4 is upright edge 38, which lies against the underside of screen 2a, 2b. This also improves the separation.

Profile 3a, 3b is constructed from two parallel tubes 31 which are once again formed by tubular profiles 31a, 31b in the embodiment of figure 4. Tubes 31 provide for a stiff assembly. Tubes 31 are provided with a groove 33, and in this embodiment the groove 33 is situated between tubular profiles 31a, 31b, in which a cover plate 32 is received. Cover plate 32 extends between tubes 31 and forms a substantially closed upper surface of profile 3a, 3b. It is also visible that cover plate 32 has two downward sloping surfaces 32a for moisture discharge. Profiles 31 are moreover provided with gutters 35 and 36 for moisture discharge in the longitudinal direction of profile 31.

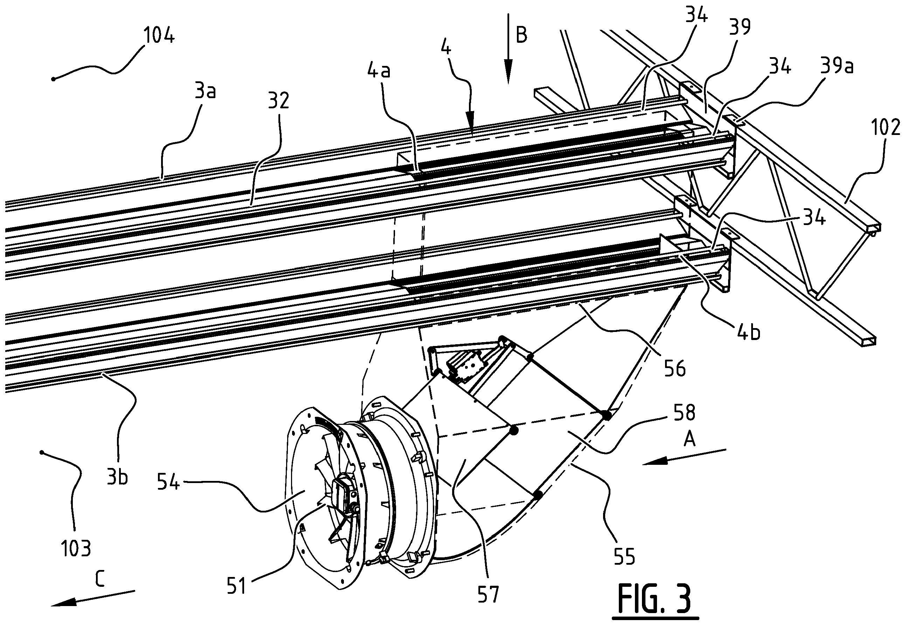

Cover plate 32 is interrupted locally for the purpose of forming passage 4. Use can for instance be made of two cover plates 32 placed at a mutual distance, between which the opening 4 is then formed. Alternatively, an opening can also be made in cover plate 32. As is visible in figures 2 and 3, opening 4a in upper profile 31 is aligned with the opening 4b in lower profile 31b. Situated between these openings is a duct 53. Air will then be able to flow from the ridge space 104, through duct 53 to the cultivation space 103. The space 106 (see particularly figure 4) between the upper fabric screens 2a, 2b and profile 3a and lower fabric screens 2a, 2b and profile 3b is then separated from both ridge space 104 and cultivation space 103. Air duct 53 here fits closely to cover plate 32.

Situated on the underside close to opening 4 is a ventilation device 5 provided with a fan 51 and a housing 52. The opening 4 of the (in this embodiment lower) profile 3b debouches in a second inlet 56 of the housing 52. Air can then be supplied from ridge space 104 via the opening 4a of upper profile 3a (indicated with arrow B), which air debouches via duct 53 and lower opening 4b into housing 52. Housing 52 has a second inlet 55 for drawing in air from cultivation space 103. This is shown schematically with the arrow A. The air from housing 52 can be exported via an outlet 54, in which the fan 51 is arranged in this embodiment, to cultivation space 103. This is indicated with arrow C. Arranged in housing 52 is a movable flap 57 with which the ratio between the indrawn air from the ridge space 104 (via inlet 56) and the cultivation space 103 (via inlet 55) can be adjusted. Inlet 55 is also provided with a flap 58 for controlling this infeed from cultivation space 103 separately from the infeed from ridge space 104.

In this embodiment housing 52 is coupled to duct 53 and is coupled to the profiles 3a, 3b, particularly tube 31, thereof. Ventilation device 5 can thus be suspended in stable manner. This also enables displacement of ventilation device 5 over the length of profiles 3a, 3b, whereby it thus becomes possible to arrange a ventilation device 5 more toward the centre, halfway between two lattice trusses 102.

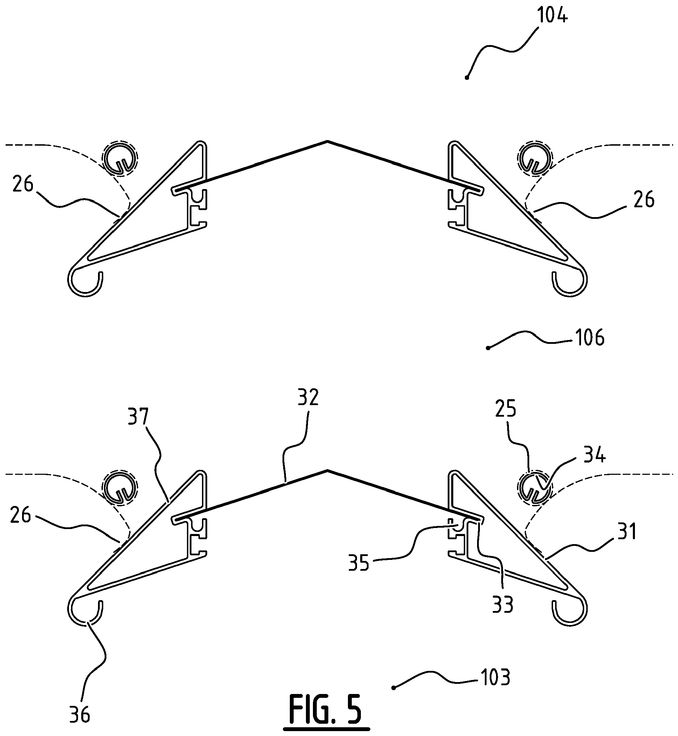

Figure 5 shows an alternative form of profiles 31. Once again, this is a profile with end plates between which the coupling systems 34, for instance wires, for the fabric screen 2a, 2b are also tensioned. Unlike upper walls 37 from figure 4, which slope downward toward the centre, the upper walls 37 now slope downward in outward direction. Moisture is now discharged to the outside instead of to the inside.

The invention is not limited to the embodiment shown in this example but also extends to variants falling within the scope of the appended claims. It will be apparent that the invention is not limited to a determined number of fabric screens. Although in the example two fabric screens are arranged one above the other, it is equally possible to suspend a single fabric screen or even more than two fabric screens in the greenhouse.

The present invention is further illustrated with reference to the following embodiments:
1. Agricultural and/or horticultural greenhouse for cultivating crops therein, wherein at least a part of the greenhouse is provided close to the upper side with horizontally suspended fabric screen which defines in that part a cultivation space for cultivating crops therein under the fabric screen and a ridge space separated from the cultivation space, **characterized in that** the greenhouse further comprises an elongate connecting profile, wherein two fabric screens extend on either side of the connecting profile and wherein the connecting profile comprises over a part of the length an opening for the purpose of creating a passage between the cultivation space and the ridge space.
2. Agricultural and/or horticultural greenhouse according to embodiment 1, wherein the connecting profile comprises two tubular profiles extending parallel to each other and a connecting plate extending between the tubular profiles, wherein the opening is situated in the connecting plate.
3. Agricultural and/or horticultural greenhouse according to embodiment 2, wherein the two tubular profiles comprise a groove for receiving a side edge of the connecting plate therein.
4. Agricultural and/or horticultural greenhouse according to at least one of the foregoing embodiments, wherein the connecting profile comprises two end plates between which the connecting profile and two coupling wires for the fabric screens extend.
5. Agricultural and/or horticultural greenhouse according to at least one of the foregoing embodiments, wherein the greenhouse comprises close to the upper part two layers of fabric screen, wherein the greenhouse further comprises two connecting profiles for each of the layers, wherein for each layer two fabric screens extend on either side of the connecting profile, wherein the openings in the connecting profiles are vertically aligned.
6. Agricultural and/or horticultural greenhouse according to embodiment 5, further comprising an air duct extending between the openings of the connecting profiles.
7. Agricultural and/or horticultural greenhouse according to at least one of the foregoing embodiments, further comprising a ventilation system with air displacing means for displacing air in the cultivation space of the greenhouse, wherein at least one of the air displacing means is situated close to the opening in the connecting profile and is configured to draw in and subsequently displace air from both the ridge space and the cultivation space.
8. Agricultural and/or horticultural greenhouse according to embodiment 7, wherein the air displacing means are coupled to the connecting profile.
9. Agricultural and/or horticultural greenhouse according to at least embodiments 2 and 8, wherein the air displacing means are coupled to the tubular profiles of the connecting profile.
10. Agricultural and/or horticultural greenhouse according to embodiment 7, 8 or 9, wherein the air displacing means comprise a housing, wherein the opening in the connecting profile debouches in a first inlet of the housing and wherein the housing also comprises a second inlet which is in contact with the cultivation space and wherein the air displacing means are configured to discharge the air out of the housing through an outlet.
11. Agricultural and/or horticultural greenhouse according to at least embodiments 6 and 10, wherein the air duct debouches in the first inlet of the housing.
12. Agricultural and/or horticultural greenhouse according to embodiment 10 or 11, wherein the housing comprises at least one flap for controlling the airflow from the two inlets to the outlet.
13. Connecting profile for use in an agricultural and/or horticultural greenhouse according to any one of the foregoing embodiments.
14. Method for arranging a ventilation system in an agricultural and/or horticultural greenhouse, comprising the steps of:
   - mounting a connecting profile in the greenhouse, wherein the connecting profile comprises an opening over a part of the length;
   - arranging fabric screens on either side of the connecting profile; and
   - attaching air displacing means to the connecting profile, wherein the air displacing means extend close to the opening in the connecting profile.

## Claims

1. Agricultural and/or horticultural greenhouse for cultivating crops therein, wherein at least a part of the greenhouse is provided close to the upper side with horizontally suspended fabric screens which define in that part a cultivation space for cultivating crops therein under the fabric screens and a ridge space separated from the cultivation space, **characterized in that** the greenhouse further comprises an elongate connecting profile, wherein two fabric screens extend on either side of the connecting profile and wherein the connecting profile comprises over a part of the length an opening for the purpose of creating a passage through the fabric screens.

2. Agricultural and/or horticultural greenhouse according to claim 1, wherein the opening extends between an upper and lower surface of the connecting profile.

3. Agricultural and/or horticultural greenhouse according to claim 1 or 2, wherein the opening creates a passage between the cultivation space and the ridge space.

4. Agricultural and/or horticultural greenhouse according to at least one of the foregoing claims, wherein the connecting profile comprises two tubular profiles extending parallel to each other and a connecting plate extending between the tubular profiles, wherein the opening is situated in the connecting plate, wherein the two tubular profiles preferably comprise a groove for receiving a side edge of the connecting plate therein.

5. Agricultural and/or horticultural greenhouse according to at least one of the foregoing claims, wherein the connecting profile comprises two end plates between which the connecting profile and two coupling wires for the fabric screens extend.

6. Agricultural and/or horticultural greenhouse according to at least one of the foregoing claims, wherein the greenhouse comprises close to the upper part two layers of fabric screen, wherein the greenhouse further comprises two connecting profiles for each of the layers, wherein for each layer two fabric screens extend on either side of the connecting profile, wherein the openings in the connecting profiles are vertically aligned, wherein the greenhouse preferably further comprises an air duct which extends between the openings of the connecting profiles.

7. Agricultural and/or horticultural greenhouse according to at least one of the foregoing claims, further comprising a ventilation system with air displacing means for displacing air in the cultivation space of the greenhouse, wherein at least one of the air displacing means is situated close to the opening in the connecting profile and is configured to draw in and subsequently displace air from both the ridge space and the cultivation space.

8. Agricultural and/or horticultural greenhouse according to claim 7, wherein the air displacing means are coupled to the connecting profile.

9. Agricultural and/or horticultural greenhouse according to at least claims 4 and 8, wherein the air displacing means are more preferably coupled to the tubular profiles of the connecting profile.

10. Agricultural and/or horticultural greenhouse according to claim 7, 8 or 9, wherein the air displacing means comprise a housing, wherein the opening in the connecting profile debouches in a first inlet of the housing and wherein the housing also comprises a second inlet which is in contact with the cultivation space and wherein the air displacing means are configured to discharge the air out of the housing through an outlet.

11. Agricultural and/or horticultural greenhouse according to at least claims 6 and 10, wherein the air duct debouches in the first inlet of the housing.

12. Agricultural and/or horticultural greenhouse according to claim 10 or 11, wherein the housing comprises at least one flap for controlling the airflow from the two inlets to the outlet.

13. Connecting profile for use according to any one of the foregoing claims in an agricultural and/or horticultural greenhouse, comprising:
- coupling systems for coupling fabric screens on either side; and
- at least one opening over a part of the length of the connecting profile, wherein the at least one opening extends between an upper and lower surface of the connecting profile.

14. Method for arranging a ventilation system in an agricultural and/or horticultural greenhouse, comprising the steps of:
- mounting a connecting profile in the greenhouse, wherein the connecting profile comprises an opening over a part of the length;
- arranging fabric screens on either side of the connecting profile.

15. Method for arranging a ventilation system in an agricultural and/or horticultural greenhouse according to claim 14, further comprising the step of attaching air displacing means to the connecting profile, wherein the air displacing means extend close to the opening in the connecting profile.
